# EUROPEAN PATENT SPECIFICATION

(11) **EP 3 974 226 B1**
(45) Date of publication and mention of the grant of the patent: **11.12.2024**
(21) Application number: 21194425.1
(22) Date of filing: 01.09.2021
(51) Int. Cl.: B60K 6/387, B60K 6/48, B60W 10/02, B60W 10/06, B60W 10/08, B60W 10/11, B60W 20/10, B60W 20/30, B60W 30/19, B60K 6/36, B60K 6/547

(54) **A HYBRID VEHICLE COMPRISING AN AUTOMATIC TRANSMISSION CONTROL DEVICE**
EIN HYBRIDFAHRZEUG MIT EINER STEUEREINRICHTUNG FÜR EIN AUTOMATISCHES GETRIEBE
UN VÉHICULE HYBRIDE COMPRENANT UN DISPOSITIF DE CONTRÔLE DE TRANSMISSION AUTOMATIQUE

(30) Priority: 24.09.2020 JP 2020159782
(43) Date of publication of application: 30.03.2022
(73) Proprietor: Suzuki Motor Corporation, Shizuoka 432-8611 (JP)
(72) Inventor: AKAGAWA, Shinya, Hamamatsu-shi, 432-8611 (JP)
(74) Representative: Henkel & Partner mbB

(56) References cited:
- EP-A2- 2 594 445
- EP-B1- 2 081 808
- DE-A1- 102010 028 023
- DE-A1- 102017 114 999
- DE-A1- 102018 205 436
- JP-A- 2013 151 261
- JP-A- 2017 001 511
- JP-A- 2019 055 771
- JP-B2- 4 274 128
- US-A1- 2016 137 188
- US-B2- 6 430 483
- US-B2- 8 568 270

## Description

### [Technical Field]

The present invention relates to a hybrid vehicle comprising an automatic transmission control device.

### [Background Art]

JP 2019-55771 A discloses that, in order to minimize the deceleration of a vehicle perceived by an occupant of the vehicle during a gear shift phase and, at the same time, reduce energy consumption of an electric motor, when a maximum torque value that can be transmitted by the electric motor is lower than an initial torque value transmitted to the wheels by a heat engine immediately before the start of the gear shift phase, a friction clutch is gradually disengaged in a period of time until the torque transmitted to the wheel by the heat engine reaches a decreased torque value substantially equal to the maximum torque value that can be transmitted by the electric motor, the friction clutch is gradually engaged in a period of time until the torque transmitted to the wheels by the heat engine changes from the decreased torque value to the initial torque value, and the electric motor transmits no torque in each period of time.

### [Summary of Invention]

### [Technical Problem]

However, although JP 2019-55771 A discloses control in the state where the electric motor transmits no torque at the start of the gear shift phase, during actual travel of the vehicle, the gear shift phase may be started while the electric motor performs travel assist for assisting the travel of the vehicle. In such a case, the driver's drivability may be affected in the method disclosed in JP 2019-55771 A.

Thus, it is an objective of the present invention to provide a hybrid vehicle comprising an automatic transmission control device that can reduce variation in torque during a speed change.

### [Solution to Problem]

In order to solve the above-mentioned problem, the present invention is a hybrid vehicle as defined in appended claim 1.

### [Advantageous Effect of Invention]

Thus, according to the present invention, it is possible to reduce variation in torque during a speed change.

### [Brief Description of Drawings]

[Figure 1] Figure 1 is a schematic configurational diagram of a hybrid vehicle according to an embodiment of the present invention.
[Figure 2] Figure 2 is a flow chart showing procedures of a speed-change assist control process of the automatic transmission control device according to the embodiment of the present invention.
[Figure 3] Figure 3 is a time chart showing changes in torque in the speed-change assist control process of the automatic transmission control device according to the embodiment of the present invention.
[Figure 4] Figure 4 is a time chart showing changes in torque when clutch releasing and connecting speeds are changed in three steps in the speed-change assist control process of the automatic transmission control device according to the embodiment of the present invention.

### [Description of Embodiment]

A hybrid vehicle according to an embodiment of the present invention will be described in detail below with reference to the drawings.

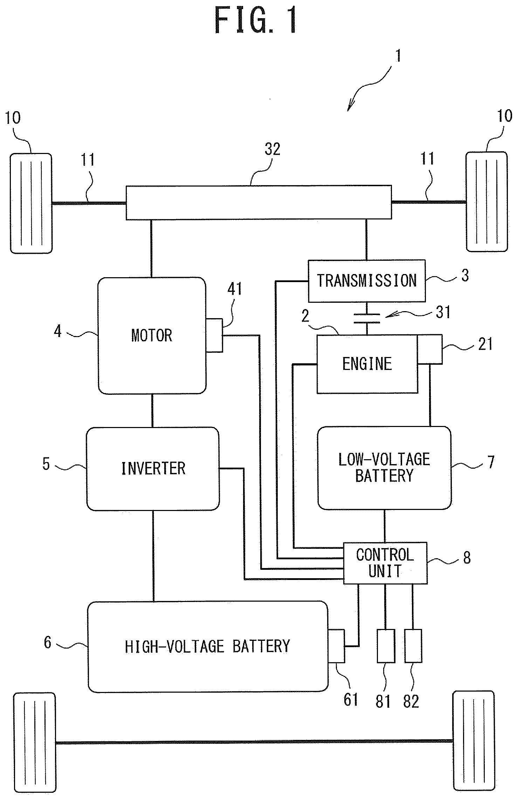

In Figure 1, a hybrid vehicle 1 according to an embodiment of the present invention includes an engine 2 as an internal combustion engine, a transmission 3 as an automatic transmission, a motor 4, an inverter 5, a high-voltage battery 6, a low-voltage battery 7, and a control unit 8.

A plurality of cylinders are formed in the engine 2. In the present embodiment, the engine 2 is configured to perform a series of four processes consisting of an intake process, a compression process, an expansion process and an exhaust process for each cylinder.

A starting device 21 is connected to the engine 2. The starting device 21 is connected to a crankshaft of the engine 2 via a belt (not shown). The starting device 21 rotates by being supplied with electric power to rotate the crankshaft and provide starting rotational force to the engine 2.

The starting device 21 is composed of a starter or an integrated starter generator (ISG). Both the starter and the ISG may be provided as the starting device 21.

The transmission 3 changes the speed of rotation output from the engine 2 and drives driving wheels 10 via drive shafts 11. The transmission 3 includes a constant-mesh transmission mechanism (not shown) consisting of a paralleled gear mechanism and an actuator (not shown).

A dry-type single-plate clutch 31 is provided between the engine 2 and the transmission 3, and the clutch 31 connects or disconnects the power transmission between the engine 2 and the transmission 3.

The transmission 3 is configured as what is called an automated manual transmission (AMT), and the switching of the gear stages in the transmission mechanism and the connection and disconnection of the clutch 31 are performed by the actuator (not shown).

A differential mechanism 32 is provided between the transmission 3 and the driving wheels 10. The differential mechanism 32 and the driving wheels 10 are connected by drive shafts 11.

The motor 4 is connected to the differential mechanism 32 via a reducer (not shown) such as a chain. The motor 4 functions as an electric motor. The motor 4 also functions as an electric generator and performs power generation as the hybrid vehicle 1 travels.

The motor 4 is provided with a temperature sensor 41 for detecting the temperature of the motor 4. The temperature sensor 41 is connected to the control unit 8.

Under control of the control unit 8, the inverter 5 converts direct-current electric power supplied from the high-voltage battery 6 or the like into three-phase alternating-current electric power and supplies it to the motor 4.

Under control of the control unit 8, the inverter 5 converts three-phase alternating-current electric power generated by the motor 4 into direct-current electric power. This direct-current electric power charges the high-voltage battery 6, for example.

The high-voltage battery 6 is composed of a lithium-ion storage battery, for example. The high-voltage battery 6 supplies electric power to the inverter 5.

The high-voltage battery 6 is provided with a battery state sensor 61. The battery state sensor 61 detects charge/discharge current, voltage, and battery temperature of the high-voltage battery 6. The battery state sensor 61 is connected to the control unit 8. The control unit 8 can detect the amount of charge of the high-voltage battery 6 based on an output of the battery state sensor 61.

The low-voltage battery 7 is composed of a lead-acid battery, for example. The low-voltage battery 7 supplies electric power to an electrical load of the hybrid vehicle 1 such as the starting device 21.

Thus, the hybrid vehicle 1 forms a parallel hybrid system capable of using power from both of the engine 2 and the motor 4 for driving the vehicle, and travels by means of power output by at least one of the engine 2 and the motor 4.

The control unit 8 is composed of a computer unit including a central processing unit (CPU), a random access memory (RAM), a read only memory (ROM), a flash memory for storing backup data or the like, an input port, and an output port.

The ROM of this computer unit stores a program for causing the computer unit to function as the control unit 8 as well as various constants, various maps and the like.

In other words, the CPU executes the program stored in the ROM by using the RAM as a workspace, so that the computer unit functions as the control unit 8 in the present embodiment.

In addition to the temperature sensor 41 and the battery state sensor 61 mentioned above, various sensors including an accelerator position sensor 81 and a clutch stroke sensor 82 are connected to the input port of the control unit 8.

The accelerator position sensor 81 detects the amount by which an accelerator pedal (not shown) is operated as an accelerator position. The clutch stroke sensor 82 detects the degree of engagement of the clutch 31.

On the other hand, in addition to the starting device 21, the actuator of the transmission 3, and the inverter 5 mentioned above, various control objects including an injector (not shown) are connected to the output port of the control unit 8.

In the present embodiment, the control unit 8 calculates driver-required torque required by the driver based on the accelerator position or the like. The control unit 8 controls the engine 2, the transmission 3, the clutch 31, and the motor 4 such that the driver-required torque is output to the driving wheels 10.

In addition, for example, the control unit 8 controls the transmission 3 and the clutch 31, based on a gear shift map for determining the gear stage of the transmission 3 from the accelerator position and the vehicle speed, such that the gear stage of the transmission 3 is changed when a shift line, which is a boundary line between adjacent gear stages, is crossed by a point obtained from the accelerator position and the vehicle speed.

In addition, the control unit 8 causes travel assist to be performed for assisting the driving of the engine 2 by driving the motor 4 when an assist allowance condition is satisfied such as that the driver-required torque is greater than or equal to predetermined torque.

In addition, the control unit 8 is configured to perform speed-change assist control to output assist torque from the motor 4 to the driving wheels 10 in a period of time where the clutch 31 is released during a speed change.

The "period of time where the clutch 31 is released" refers to a period of time where complete engagement of the clutch 31 is removed (this period of time will hereinafter be referred to as an "incomplete engagement period"), and the incomplete engagement period includes what is called a half-clutch state. The half-clutch state refers to a state where friction members of the clutch 31 engage with each other in a slipping manner to transmit power.

In a vehicle in which the clutch is provided in the power transmission path between the transmission mechanism and the engine, since no torque from the engine is transmitted to the driving wheels in the incomplete engagement period of the clutch during a speed change, what is called torque loss, loss of acceleration/deceleration feeling, occurs, and a free-running feeling is caused by this torque loss.

The speed-change assist control is to avoid the occurrence of the free-running feeling due to torque loss by outputting assist torque from the motor 4 to the driving wheels 10 in the incomplete engagement period of the clutch 31 during a speed change.

The control unit 8 increases the releasing speed of the clutch 31 in a clutch releasing process during a speed change of the transmission 3 and causes speed-change assist torque to be output from the motor 4 at a timing according to the output state of torque of the motor 4 at the start of the speed change.

For example, the control unit 8 increases the releasing speed of the clutch 31 in a clutch releasing process during a speed change of the transmission 3 and causes speed-change assist torque as well as travel assist torque to be output from the motor 4 at a timing according to the output state of the travel assist torque of the motor 4 at the start of the speed change.

The control unit 8 sets the releasing speed of the clutch 31 at the start of the speed change to a first speed, and sets the releasing speed of the clutch 31 to a second speed faster than the first speed at a timing according to the output state of the travel assist torque of the motor 4 at the start of the speed change of the transmission 3.

The travel assist torque at the start of the speed change is travel assist torque output from the motor 4 at a predetermined timing after the control unit 8 determines to perform the speed change and before the release of the clutch 31 is started, for example. Note that, in the present embodiment, the travel assist torque at the start of the speed change is maintained even after the speed change starts, and the travel assist torque at the start of the speed change is output even after the speed change ends.

The clutch releasing process refers to a period of time from when complete engagement of the clutch 31 starts to be removed to when the clutch 31 is completely released.

The control unit 8 increases the releasing speed of the clutch 31 and causes the speed-change assist torque as well as the travel assist torque to be output from the motor 4 when the clutch torque is decreased to predetermined torque in the clutch releasing process during the speed change.

The control unit 8 increases the releasing speed of the clutch 31 and causes the speed-change assist torque as well as the travel assist torque to be output from the motor 4 when the clutch torque is decreased to available assist torque, for example, in the clutch releasing process during the speed change.

The clutch torque refers to the torque of an output shaft of the transmission 3, which torque is output to the differential mechanism 32. The available assist torque is torque that can be output by the motor 4 as the speed-change assist torque based on the output state of torque of the motor 4 at the start of the speed change.

For example, the control unit 8 sets, as the available assist torque, the difference between maximum motor output torque, which is the maximum torque that can be output by the motor 4 at the start of the speed change, and the travel assist torque output by the motor 4 at the start of the speed change.

The control unit 8 calculates the maximum motor output torque based on the amount of charge of the high-voltage battery 6 or the state of heat generation of the motor 4.

For example, the control unit 8 may calculate the maximum motor output torque at a predetermined period, and increase the clutch releasing speed and cause the speed-change assist torque as well as the travel assist torque to be output from the motor 4 at a point of time when the difference between the output torque of the motor 4 at the start of the speed change and the maximum motor output torque becomes equal to the clutch torque.

The control unit 8 may increase the clutch releasing speed and cause the speed-change assist torque as well as the travel assist torque to be output from the motor 4 at a point of time when total torque becomes equal to the maximum motor output torque in the clutch releasing process during the speed change.

The total torque is the torque output to the drive shafts 11, and the sum of the clutch torque and the motor torque.

The control unit 8 causes the motor 4 to output the difference between the maximum motor output torque and the clutch torque as assist torque (the travel assist torque plus the speed-change assist torque) after increasing the releasing speed of the clutch 31 in the clutch releasing process during the speed change. In other words, the control unit 8 adds the speed-change assist torque, which corresponds to the amount of decrease in the clutch torque, to the travel assist torque output by the motor 4 from the start of the speed change to obtain the assist torque.

The control unit 8 sets the connecting speed of the clutch 31 to be faster than after the clutch torque becomes greater than or equal to the available assist torque until the clutch torque becomes equal to the available assist torque in a clutch connecting process during the speed change.

The clutch connecting process refers to a period of time from when the engagement of the clutch 31 starts after the switching of gear stages of the transmission mechanism of the transmission 3 to when the clutch 31 is completely engaged.

When the connecting speed of the clutch 31 until the clutch torque becomes equal to the available assist torque is defined as a third speed and the connecting speed of the clutch 31 after the clutch torque becomes greater than or equal to the available assist torque is defined as a fourth speed, the control unit 8 sets the third speed to be faster than the fourth speed in the clutch connecting process during the speed change.

The control unit 8 causes the motor 4 to output the difference between the maximum motor output torque and the clutch torque as the assist torque after starting the engagement of the clutch 31 in the clutch connecting process during the speed change. Then, after the clutch torque becomes equal to the available assist torque and the connecting speed of the clutch is decreased, the travel assist torque output by the motor 4 at the start of the speed change is output by the motor 4.

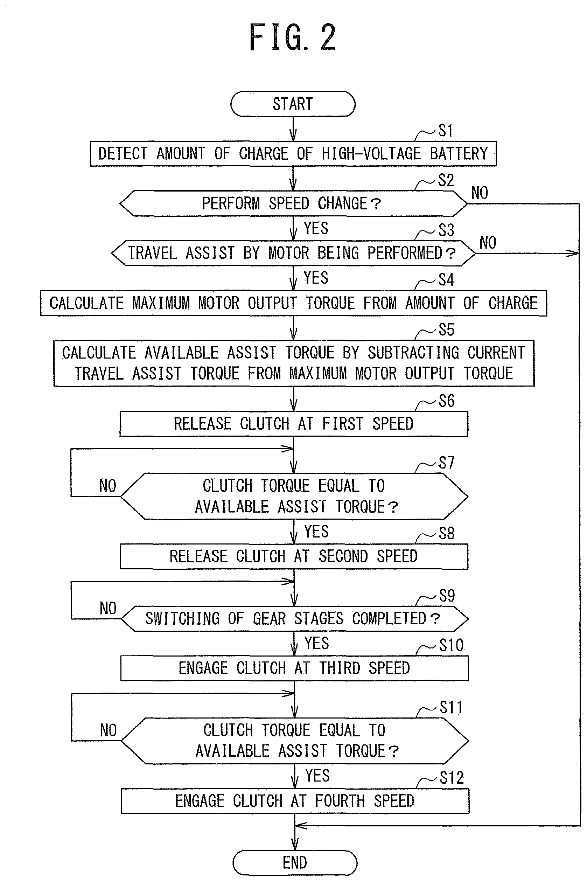

A speed-change assist control process performed by the automatic transmission control device according to the present embodiment configured as described above will be described with reference to Figure 2. Note that the speed-change assist control process described below is started when the control unit 8 starts operation, and is performed at a preset time interval.

In step S1, the control unit 8 detects the amount of charge of the high-voltage battery 6. After performing the process of step S 1, the control unit 8 performs the process of step S2.

In step S2, the control unit 8 determines whether to perform a speed change. For example, the control unit 8 determines whether to perform a speed change based on the vehicle speed, the engine rotation rate, or the like.

When determining to perform a speed change, the control unit 8 performs the process of step S3. When determining not to perform a speed change, the control unit 8 ends the speed-change assist control process.

In step S3, the control unit 8 determines whether travel assist by the motor 4 is currently performed.

When determining that travel assist by the motor 4 is being performed, the control unit 8 performs the process of step S4. When determining that travel assist by the motor 4 is not being performed, the control unit 8 ends the speed-change assist control process.

In step S4, the control unit 8 calculates the maximum motor output torque from the amount of charge of the high-voltage battery 6. After performing the process of step S4, the control unit 8 performs the process of step S5.

In step S5, the control unit 8 calculates the available assist torque by subtracting the current travel assist torque from the maximum motor output torque. After performing the process of step S5, the control unit 8 performs the process of step S6.

In step S6, the control unit 8 starts to release the clutch 31 at the first speed. After performing the process of step S6, the control unit 8 performs the process of step S7.

In step S7, the control unit 8 determines whether the clutch torque is equal to the available assist torque.

When determining that the clutch torque is equal to the available assist torque, the control unit 8 performs the process of step S8. When determining that the clutch torque is not equal to the available assist torque, the control unit 8 repeats the process of step S7.

In step S8, the control unit 8 starts to release the clutch 31 at the second speed. After performing the process of step S8, the control unit 8 performs the process of step S9.

In step S9, the control unit 8 determines whether switching of the gear stages is completed. When determining that the switching of the gear stages is completed, the control unit 8 performs the process of step S10. When determining that the switching of the gear stages is not completed, the control unit 8 repeats the process of step S9.

In step S10, the control unit 8 starts to engage the clutch 31 at the third speed. After performing the process of step S10, the control unit 8 performs the process of step S11.

In step S11, the control unit 8 determines whether the clutch torque is equal to the available assist torque.

When determining that the clutch torque is equal to the available assist torque, the control unit 8 performs the process of step S12. When determining that the clutch torque is not equal to the available assist torque, the control unit 8 repeats the process of step S11.

In step S12, the control unit 8 starts to engage the clutch 31 at the fourth speed. After performing the process of step S12, the control unit 8 ends the speed-change assist control process.

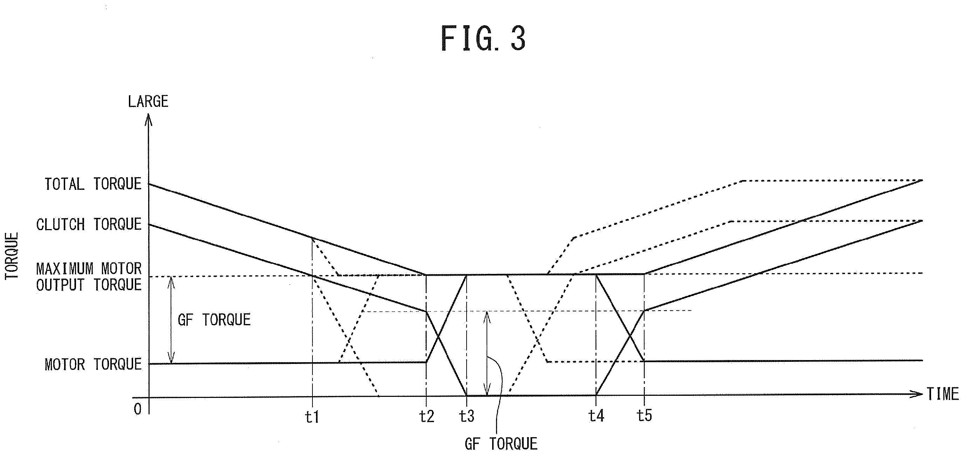

Operations in this speed-change assist control process will be described with reference to Figure 3. Note that changes in each torque indicated by a dotted line show changes in torque in the case of changing the releasing speed or connecting speed of the clutch 31 when the clutch torque becomes equal to the maximum motor output torque.

When a speed change process is started and removal of complete engagement of the clutch 31 is started, the clutch 31 is released at the first speed, the clutch torque decreases, and the total torque transmitted to the drive shafts 11 also decreases. At this time, since the clutch torque is larger than the available assist torque, the output of the speed-change assist torque by the motor 4 is not performed, and the travel assist torque at the start of the speed change continues to be output.

If the releasing speed of the clutch 31 is increased when the clutch torque becomes equal to the maximum motor output torque at time t1, the total torque transmitted to the drive shafts 11 abruptly decreases as indicated by a dotted line, to cause vibration.

In the present embodiment, from time t2 at which the clutch torque becomes equal to the available assist torque (indicated as "GF torque" in the figure), the releasing speed of the clutch 31 is increased to the second speed, which is faster than the first speed, and the difference between the maximum motor output torque and the clutch torque is output from the motor 4 as the assist torque (the travel assist torque plus the speed-change assist torque).

When the clutch 31 is completely released at time t3, switching of gear stages of the transmission mechanism of the transmission 3 is started, during which motor assist by the motor 4 at the maximum motor output torque is performed.

If engagement of the clutch 31 is started at the third speed, which is substantially equal to the second speed, for example, after the switching of gear stages of the transmission mechanism of the transmission 3 is completed, and the connecting speed of the clutch 31 is maintained until the clutch torque becomes equal to the maximum motor output torque, the total torque transmitted to the drive shafts 11 abruptly increases as indicated by a dotted line, to cause vibration.

In the present embodiment, when the switching of gear stages of the transmission mechanism of the transmission 3 is completed at time t4, engagement of the clutch 31 is started at the third speed, which is substantially equal to the second speed, for example, and the assist torque from the motor 4 is decreased such that its sum with the clutch torque becomes equal to the maximum motor output torque.

When the clutch torque becomes equal to the available assist torque at time t5, the connecting speed of the clutch 31 is decreased to the fourth speed, and the output of the motor 4 is maintained at the travel assist torque output by the motor 4 at the start of the speed change.

Thus, in the present embodiment, the control unit 8 increases the releasing speed of the clutch 31 in a clutch releasing process during a speed change of the transmission 3 and causes the motor 4 to output the speed-change assist torque as well as travel assist torque at a timing according to the output state of travel assist torque of the motor 4 at the start of the speed change.

In this manner, the timing for increasing the releasing speed of the clutch 31 in the clutch releasing process is changed according to the output state of assist torque of the motor 4 at the start of the speed change. Thus, it is possible to increase the releasing speed of the clutch 31 at a timing suitable to the travel assist torque of the motor 4 at the start of the speed change, and reduce variation in torque during the speed change.

In addition, since the releasing speed of the clutch 31 is increased, it is possible to shorten the speed change time.

Since the speed change time can be shortened, it is possible to reduce the lag feeling during the speed change.

In addition, since the releasing speed of the clutch 31 is increased, it is possible to shorten assist time of the motor 4 during the speed change and reduce energy consumption of the motor 4.

In addition, the control unit 8 increases the releasing speed of the clutch 31 and causes the speed-change assist torque as well as travel assist torque to be output from the motor 4 when the clutch torque is decreased to predetermined torque in the clutch releasing process during the speed change of the transmission 3.

In this manner, when the clutch torque is decreased to the predetermined torque, the releasing speed of the clutch 31 is increased, and the speed-change assist torque as well as travel assist torque is output from the motor 4. Thus, it is possible to increase the releasing speed of the clutch 31 at a timing when the clutch torque is decreased to the predetermined torque, reduce variation in torque during the speed change, and reduce energy consumption of the motor 4.

In addition, the control unit 8 increases the releasing speed of the clutch 31 and causes the speed-change assist torque as well as travel assist torque to be output from the motor 4 when the clutch torque is decreased to the available assist torque in the clutch releasing process during the speed change of the transmission 3.

In this manner, when the clutch torque is decreased to the available assist torque, the releasing speed of the clutch 31 is increased, and the speed-change assist torque is output from the motor 4 as well as the travel assist torque. Thus, it is possible to increase the releasing speed of the clutch 31 at a timing when the clutch torque is decreased to the available assist torque, reduce variation in torque during the speed change, and reduce energy consumption of the motor 4.

In addition, the control unit 8 increases the releasing speed of the clutch 31 and causes the speed-change assist torque as well as the travel assist torque to be output from the motor 4 when the total torque is decreased to the maximum motor output torque in the clutch releasing process during the speed change of the transmission 3.

In this manner, when the total torque is decreased to the maximum motor output torque, the releasing speed of the clutch 31 is increased, and the speed-change assist torque is output from the motor 4 as well as the travel assist torque. Thus, it is possible to increase the releasing speed of the clutch 31 at a timing when the total torque is decreased to the maximum motor output torque, reduce variation in torque during the speed change, and reduce energy consumption of the motor 4.

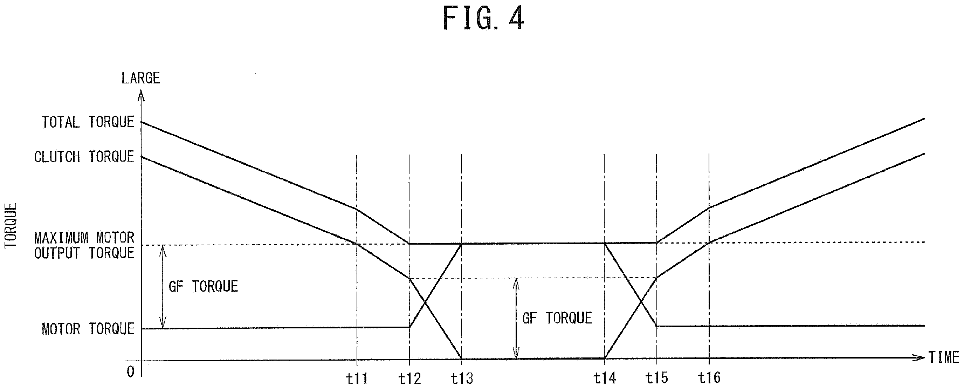

Note that, although the releasing speed of the clutch 31 and the connecting speed of the clutch 31 are changed in two steps in the present embodiment, they may be changed in more than two steps. Figure 4 shows a case of changing the releasing and connecting speeds of the clutch 31 in three steps.

In Figure 4, when a speed change process is started and removal of complete engagement of the clutch 31 is started, the clutch 31 is released at the first speed, the clutch torque decreases, and the torque transmitted to the drive shafts 11 also decreases. At this time, since the clutch torque is larger than the maximum motor output torque, the output of the assist torque by the motor 4 is not performed, and the travel assist torque at the start of the speed change continues to be output.

When the clutch torque becomes equal to the maximum motor output torque at time t11, the releasing speed of the clutch 31 is increased to a speed faster than the first speed and slower than the second speed.

When the clutch torque becomes equal to the available assist torque (indicated as "GF torque" in the figure) at time t12, the releasing speed of the clutch 31 is increased to the second speed, and the difference between the maximum motor output torque and the clutch torque is output from the motor 4 as the assist torque (the travel assist torque plus the speed-change assist torque).

When the clutch 31 is completely released at time t13, switching of the gear stages of the transmission mechanism of the transmission 3 is started, during which motor assist by the motor 4 at the maximum motor output torque is performed.

When the switching of the gear stages of the transmission mechanism of the transmission 3 is completed at time t14, engagement of the clutch 31 is started at the third speed, and the assist torque from the motor 4 is decreased such that the sum of the assist torque from the motor 4 and the clutch torque becomes equal to the maximum motor output torque.

When the clutch torque becomes equal to the available assist torque at time t15, the connecting speed of the clutch 31 is decreased to a speed slower than the third speed and faster than the fourth speed, and the assist torque from the motor 4 is maintained at the travel assist torque output by the motor 4 at the start of the speed change.

When the clutch torque becomes equal to the maximum motor output torque at time t16, the connecting speed of the clutch 31 is decreased to the fourth speed.

In this manner, it is possible to shorten the speed change time, and reduce the lag feeling during the speed change while reducing variation in torque during the speed change.

Although an example where the control unit 8 performs various determinations and calculations based on various pieces of sensor information has been described in the present embodiment, there is no limitation thereto, and the hybrid vehicle 1 may include a communication unit capable of communicating with an external device such as an external server so that the various determinations and calculations are performed by the external device based on detection information of various sensors transmitted from the communication unit, the communication unit receives those determination and calculation results, and various control operations are performed by using those received determination and calculation results.

Although the embodiment of the present invention has been disclosed, it is obvious that those skilled in the art can make changes without departing from the scope of the present invention as defined in the appended claims.

### [Reference Signs List]

1...hybrid vehicle, 2...engine, 3...transmission (automatic transmission), 4...motor, 6...high-voltage battery (battery), 8... control unit, 11... drive shaft, 31... clutch, 41...temperature sensor, 61...battery state sensor, 81... accelerator position sensor, 82...clutch stroke sensor

## Claims

1. A hybrid vehicle (1) comprising an automatic transmission control device, an engine (2), an automatic transmission (3) configured to change a speed of rotation of the engine (2) and to transmit the rotation to a drive shaft (11) via a differential mechanism (32), a motor (4) connected to the differential mechanism (32) via a reducer, and a clutch (31) configured to release or connect power transmission between the engine (2) and the drive shaft (11), the automatic transmission control device comprising a control unit (8) configured to control the automatic transmission (3) and the clutch (31) to control switching of gear stages of the automatic transmission (3), wherein the control unit (8) is configured to change a releasing speed of the clutch (31) in a clutch releasing process during a speed change of the automatic transmission (3) and to cause the motor (4) to output a speed-change assist torque as well as a travel assist torque at a timing according to an output state of the travel assist torque of the motor (4) at a start of the speed change of the automatic transmission (3).

2. The hybrid vehicle as claimed in claim 1, wherein the control unit (8) is configured to increase the releasing speed of the clutch (31) and to cause the motor (4) to output the speed-change assist torque when a clutch torque output to the automatic transmission (3) decreases to a predetermined torque in the clutch releasing process during the speed change of the automatic transmission (3).

3. The hybrid vehicle as claimed in claim 2, wherein the control unit (8) is configured to increase the releasing speed of the clutch (31) and to cause the motor (4) to output the speed-change assist torque when the clutch torque decreases to an available assist torque in the clutch releasing process during the speed change of the automatic transmission (3).

4. The hybrid vehicle as claimed in claim 1, wherein the control unit (8) is configured to increase the releasing speed of the clutch (31) and to cause the motor (4) to output the speed-change assist torque when a torque output to the drive shaft (11) decreases to a maximum motor output torque in the clutch releasing process during the speed change of the automatic transmission (3).

## Patentansprüche

1. Ein Hybridfahrzeug, das eine Steuervorrichtung für ein automatisches Getriebe, eine Antriebsmaschine (2), ein automatisches Getriebe (3), das konfiguriert ist, um eine Drehzahl der Antriebsmaschine (2) zu ändern und die Drehung über einen Differentialmechanismus auf eine Antriebswelle (11) zu übertragen (32), einen Motor (4), der mit dem Differentialmechanismus (32) über ein Untersetzungsgetriebe verbunden ist, und eine Kupplung (31), die konfiguriert ist, um die Kraftübertragung zwischen dem Motor (2) und der Antriebswelle (11) zu lösen oder zu verbinden,
wobei die Steuervorrichtung für das automatische Getriebe eine Steuereinheit (8) umfasst, die konfiguriert ist, um das automatische Getriebe (3) und die Kupplung (31) zu steuern, um das Schalten von Gangstufen des automatischen Getriebes (3) zu steuern, wobei
die Steuereinheit (8) konfiguriert ist, um eine Ausrückgeschwindigkeit der Kupplung (31) in einem Kupplungsausrückvorgang während eines Gangwechsels des automatischen Getriebes (3) zu ändern und den Motor (4) zu veranlassen, ein Gangwechsel-Unterstützungsdrehmoment sowie ein Fahrunterstützungsdrehmoment zu einem Zeitpunkt gemäß einem Ausgabezustand des Fahrunterstützungsdrehmoments des Motors (4) bei einem Beginn des Gangwechsels des automatischen Getriebes (3) auszugeben.

2. Hybridfahrzeug gemäß Anspruch 1, wobei die Steuereinheit (8) konfiguriert ist, um die Ausrückgeschwindigkeit der Kupplung (31) zu erhöhen und zu bewirken, dass der Motor (4) das Drehmoment zur Unterstützung des Gangwechsels ausgibt, wenn ein an das automatische Getriebe (3) ausgegebenes Kupplungsdrehmoment während des Ausrückvorgangs der Kupplung während des Gangwechsels des automatischen Getriebes (3) auf ein vorbestimmtes Drehmoment abfällt.

3. Hybridfahrzeug gemäß Anspruch 2, wobei die Steuereinheit (8) so konfiguriert ist, dass sie die Ausrückgeschwindigkeit der Kupplung (31) erhöht und bewirkt, dass der Motor (4) das Drehmoment zur Unterstützung des Gangwechsels ausgibt, wenn das Kupplungsdrehmoment während des Ausrückvorgangs beim Gangwechsel des automatischen Getriebes (3) auf ein verfügbares Unterstützungsdrehmoment abfällt.

4. Hybridfahrzeug gemäß Anspruch 1, wobei die Steuereinheit (8) so konfiguriert ist, dass sie die Ausrückgeschwindigkeit der Kupplung (31) erhöht und bewirkt, dass der Motor (4) das Drehmoment zur Unterstützung des Gangwechsels abgibt, wenn ein an die Antriebswelle (11) abgegebenes Drehmoment während des Kupplungsausrückvorgangs während des Gangwechsels des automatischen Getriebes (3) auf ein maximales Motorausgangsdrehmoment abfällt.

## Revendications

1. Véhicule (1) hybride comprenant
un dispositif automatique de commande de transmission,
un moteur (2),
une transmission (3) automatique configurée pour changer une vitesse de rotation du moteur (2) et pour transmettre la rotation à un arbre (11) d'entraînement en passant par un mécanisme (32) différentiel,
un moteur (4) relié au mécanisme (32) différentiel par un réducteur, et
un embrayage (31) configuré pour déconnecter ou connecter une transmission de puissance entre le moteur (2) et l'arbre (11) d'entraînement,
le dispositif automatique de commande de transmission comprenant une unité (8) de commande configurée pour commander la transmission (3) automatique et l'embrayage (31) afin de commander une commutation de paliers de vitesse de la transmission (3) automatique, dans lequel
l'unité (8) de commande est configurée pour changer une vitesse de déconnexion de l'embrayage (31) dans une opération de déconnexion de l'embrayage pendant un changement de vitesse de la transmission (3) automatique et pour faire que le moteur (4) donne un couple d'assistance au changement de vitesse ainsi qu'un couple d'assistance au déplacement à un rythme en fonction d'un état de sortie du couple d'assistance au déplacement du moteur (4) au début du changement de vitesse de la transmission (3) automatique.

2. Véhicule hybride suivant la revendication 1, dans lequel l'unité (8) de commande est configurée pour augmenter la vitesse de déconnexion de l'embrayage (31) et pour faire que le moteur (4) donne le couple d'assistance au changement de vitesse, lorsqu'une sortie de couple d'embrayage à la transmission (3) automatique diminue jusqu'à un couple déterminé à l'avance dans l'opération de déconnexion de l'embrayage pendant le changement de vitesse de la transmission (3) automatique.

3. Véhicule hybride suivant la revendication 2, dans lequel l'unité (8) est configurée pour augmenter la vitesse de déconnexion de l'embrayage (31) et pour faire que le moteur (4) donne le couple d'assistance au changement de vitesse, lorsque le couple d'embrayage diminue jusqu'à un couple d'assistance disponible dans l'opération de déconnexion de l'embrayage pendant le changement de vitesse de la transmission (3) automatique.

4. Véhicule hybride suivant la revendication 1, dans lequel l'unité (8) de commande est configurée pour augmenter la vitesse de déconnexion de l'embrayage (31) et pour faire que le moteur (4) donne le couple d'assistance au changement de vitesse, lorsqu'une sortie de couple à l'arbre (11) d'entraînement diminue jusqu'à un couple de sortie maximum du moteur dans l'opération de déconnexion de l'embrayage pendant le changement de vitesse de la transmission (3) automatique.
